# EUROPÄISCHE PATENTANMELDUNG

(11) **EP 1 855 237 A1**
(43) Veröffentlichungstag der Anmeldung: **14.11.2007**
(21) Anmeldenummer: 07006784.8
(22) Anmeldetag: 31.03.2007
(51) Int. Cl.: G06Q 10/00

(54) **System und Verfahren zur automatisierten Generierung, Verwaltung und Dokumentation von Gerätezusammenstellungen**

(30) Priorität: 08.05.2006 DE 102006021541
(71) Anmelder: ABB Technology AG, 8050 Zurich (CH)
(72) Erfinder: Müller, Harald, Dipl.-Ing., 67240 Bobenheim-Roxheim (DE); Bremmer, Wolfgang, Dipl.-Ing., 67549 Worms (DE)
(74) Vertreter: Miller, Toivo

(57) **Zusammenfassung**

Die Erfindung betrifft ein System und ein Verfahren zur automatisierten Generierung, Verwaltung und Dokumentation von Gerätezusammenstellungen mittels eines Datenverarbeitungssystems, welches wenigstens eine Datenquelle zur Bereitstellung von Massendaten und ein Erfassungsmodul zur Erstellung und Verwaltung von Objekten aufweist. Das Erfassungsmodul wirkt mit einem Grafikmodul zusammen, welches durch eine Kcmbination der erstellten Objekte Schemata erzeugt, und die vom Grafikmodul erzeugten Schemata in ein Verarbeitungsmodul zur Generierung von eineindeutigen Instanzen mittels einer mehrfachen Zuweisung der Schemata zu den Massendaten überträgt.

## Beschreibung

Die Erfindung betrifft ein System und ein Verfahren zur automatisierten Generierung, Verwaltung und Dokumentation von Gerätezusammenstellungen mittels eines Datenverarbeitungssystems. Die Erfindung findet insbesondere Verwendung in der in der Anlagentechnik. Leittechnik und Verfahrensplanung.

Bekannte Verfahren zur Verwaltung und Dokumentation von Gerätezusammenstellungen, wie beispielsweise zum Generieren und Verwalten von zweidimensionalen Grafiken mit einer Stückliste, zur Erstellung einer Kalkulation, zur Verwaltung von zentralen Objekten und der Bildung von spezifischen Massendaten durch eine Instanziierung sowie zur Verwaltung von Dokumenten werden gegenwärtig auf verschiedenen Plattformen realisiert und sind nicht miteinander koppelbar. Ein Datenaustausch ist nur über zusätzliche Schnittstellen möglich, wobei eine Anpassung der Formate und Dateninhalte erforderlich ist.

Auch ist die Eindeutigkeit der Daten nicht zwingend gewährleistet und muss durch eine manuelle Prüfung und aufwendige Nachbearbeitung sichergestellt werden.

Eine Bedienung der Schnittstellen erfolgt nicht automatisiert, sondern muss vom Benutzer ausgelöst werden.

Ein weiterer Nachteil beruht auf den oft zu unterschiedlichen Zeiten stattfindenden Datentransfers, wodurch die Gefahr von Inkonsistenzen durch unterschiedliche Bearbeitungsstände besteht.

Die Zeitdauer für die Bedienung der Schnittstellen und die Prüfung der transferierten Daten lässt sich bestenfalls abschätzen und hängt proportional mit der Anzahl der Massendaten zusammen. Durch diese, von einer Person durchzuführende, manuelle Prüfungstätigkeit kommt es zu Fehlern, die darüber hinaus nicht ohne weiteres reproduzierbar sind.

Ausgehend von den beschriebenen Nachteilen liegt der Erfindung die Aufgabe zugrunde, ein System und ein Verfahren zur automatisierten Generierung, Verwaltung und Dokumentation von Gerätezusammenstellungen mittels eines Datenverarbeitungssystems anzugeben, wodurch vorgenannte Nachteile des Standes der Technik überwunden werden.

Diese Aufgabe wird erfindungsgemäß durch ein System der eingangs genannten Art mit den im Anspruch 1 angegebenen Merkmalen gelöst. Vorteilhafte Ausgestaltungen, Verbesserungen des erfindungsgemäßen Systems sowie ein Verfahren zur Ausführung des Systems sind in weiteren Ansprüchen und in der Beschreibung angegeben.

Das erfindungsgemäße System zur automatisierten Generierung, Verwaltung und Dokumentation von Gerätezusammenstellungen mittels eines Datenverarbeitungssystems umfasst wenigstens eine Datenquelle zur Bereitstellung von Massendaten und ein Erfassungsmodul zur Erstellung und Verwaltung von Objekten, wobei das Erfassungsmodul mit einem Grafikmodul zusammenwirkt, welches durch eine Kombination der erstellten Objekte Schemata erzeugt. Die erstellten Objekte beschreiben beispielsweise Einzelteile und/oder -geräte mit ihren Attributen, Daten und Dokumenten, wie beispielsweise elektrotechnische Komponenten und Feldgeräte einer technischen Anlage. Die Massedaten sind vorzugsweise Prozess- und Verfahrensdaten, die beispielsweise in Form von Verbraucherlisten und/oder Instrumentierungslisten bereitgestellt werden.

Die vom Grafikmodul erzeugten Schemata sind in ein Verarbeitungsmodul zur Generierung eineindeutiger Instanzen mittels einer mehrfachen Zuweisung der Schemata zu den Massendaten übertragbar. Als Instanzen werden Daten identischer Objekte oder Symbole bezeichnet, welche nur einmal gespeichert werden, wobei die Objekte dann Instanzen des einmal hinterlegten Gerätetyps sind. Die vom Verarbeitungsmodul generierten Instanzen sind als Gerätezusammenstellungen mit einer vollständigen Dokumentation mittels eines Auswertemoduls darstellbar und/oder weiterverarbeitbar.

Die mittels des Grafikmoduls erzeugten Schemata setzen sich aus mehreren Einzelteilen und/oder -geräten, den Objekten, zusammen, welche im Datenverarbeitungssystem mit allen ihren Attributen, Daten und Dokumenten verwaltet werden.

In einer vorteilhaften Ausgestaltung der Erfindung ist vorgesehen, die Gerätezusammenstellungen graphisch darzustellen und mit liefergrenzenabhängigen Stücklisten zu versehen. Aus dem so erzeugtem Datenbestand sind mittels eines Ausgabe- und/oder Anzeigemoduls Auszählungen, Statistiken und Zusammenfassungen generierbar und/oder darstellbar.

Weiterhin ist vorgesehen den Objekten und Schemata - neben den beschreibenden Informationen - auch Preise, Rabatte und Kosten zuzuweisen, woraus in vorteilhafter Weise Kostenaufstellungen, Kostenkataloge sowie Bestellanforderungen generierbar sind.

In einer weiteren vorteilhaften Ausführung der Erfindung sind den Objekten und Schemata zugehörige Dokumente zugewiesen, welche unter Berücksichtigung der erzeugten Instanzen der verwendeten Objekte und Schemata in einer zentralen Datenbank speicherbar sind.

Das Verfahren zur automatisierten Generierung, Verwaltung und Dokumentation von Gerätezusammenstellungen mittels eines Datenverarbeitungssystems mit dem die Aufgabe weiterhin gelöst wird, ist dem Anspruch 12 zu entnehmen.

Das erfindungsgemäße Verfahren beruht auf einem mehrstufigen durchgängigen Verfahrensablauf, wobei mittels wenigstens einer Datenquelle Massendaten bereitgestellt werden und mittels des Erfassungsmoduls Objekte erstellt und verwaltet werden.

Mittels eines Grafikmoduls werden aus den vom Erfassungsmodul erstellten Objekten durch eine Kombination der Objekte Schemata erzeugt. Anschließend werden die vom Grafikmodul erzeugten Schemata in ein Verarbeitungsmodul zur Generierung von eineindeutigen Instanzen mittels einer mehrfachen Zuweisung der Schemata zu den Massendaten übertragen.

In vorteilhafter Weise wird das Erstellen und Verwalten der Objekte, Schemata sowie auch die Verwaltung der Massendatensätze beispielsweise zur Erstellung einer Kalkulation, von einer zentralen Plattform ausgeführt, wodurch die Datenkonsistenz und Aktualität automatisch gewährleistet ist und zusätzliche Schnittstellen zum Datenaustausch entfallen.

In einer vorteilhaften Ausgestaltung der Erfindung ist vorgesehen, mittels intelligenter Mechanismen automatisiert einen Austausch von Einzelteilen/-geräten in den Schemata durchzuführen.

Ein weiterer Vorteil der Erfindung beruht darauf, dass durch das automatisierte Sammeln der Gerätedokumente eine Mehrfach-Ablage von identischen Dokumenten verhindert wird.

Weiterhin ist ein automatisiertes Generieren von Listen mit Kostenzusammenstellungen und Liefergrenzen durchführbar, wobei durch die Eingabe oder Zuordnung von Kalkulationsmengen zu den Schemata Kostenzusammenstellungen auch ohne die Generierung der Instanzen möglich sind.

Das erfindungsgemäße System und Verfahren werden vorzugsweise in der Verfahrens-, Anlagen- oder Leittechnik-Planung eingesetzt, wo durch Zuordnungen von zentralen Daten zu Massendaten spezifische Instanzen generiert und dann weiter verarbeitet werden können. Finden aber auch Anwendung in der technischen Planung, wie beispielsweise der Verfahrenstechnik, der Anlagentechnik, dem Anlagenbau, der Automatisierungstechnik, der Elektrotechnik und der Verkabelung.

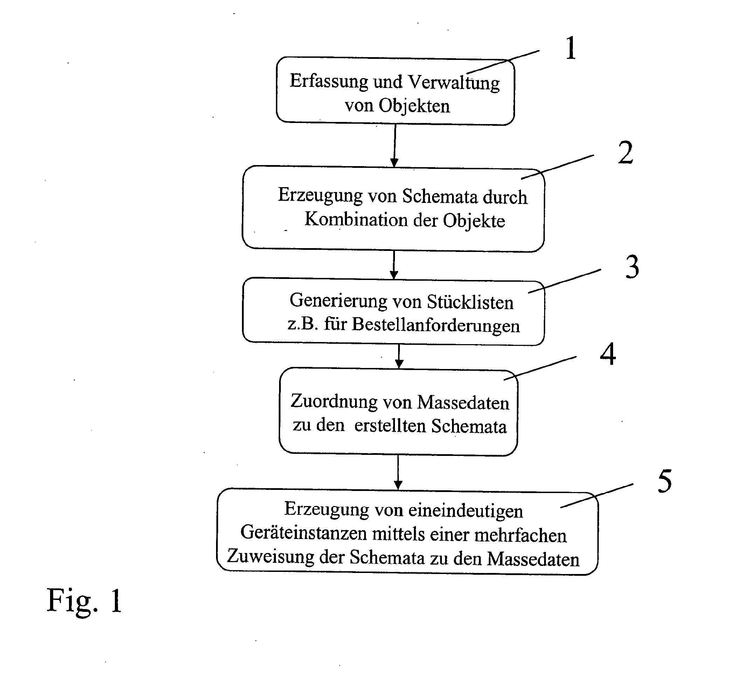

Anhand des in der Figur 1 dargestellten Ausführungsbeispieles sollen die Erfindung sowie vorteilhafte Ausgestaltungen, Verbesserungen und weitere Vorteile der Erfindung näher erläutert und beschrieben werden.

Fig. 1 zeigt eine Ausführungsform des erfindungsgemäßen Verfahrens zur automatisierten Generierung, Verwaltung und Dokumentation von Gerätezusammenstellungen mittels eines Datenverarbeitungssystems anhand der Verfahrensschritte 1 bis 5.

In einem ersten Schritt 1 werden Objekte, also Einzelteile und/oder -geräte , welche beispielsweise kaufbare Produkte und Leistungen sind - mittels eines Erfassungsmoduls erstellt und verwaltet. Diese Einzelteile und/oder -geräte sind durch einen so genannten Bezeichner eindeutig benannt und werden durch definierte Datenfelder beschrieben.

Neben den allgemeinen technischen Informationen werden auch kostenrelevante, versandspezifische und Bestell-Daten gehalten. Den Einzelteile und/oder - geräten werden beliebige Dokumente, wie beispielsweise Datenblätter oder Zeugnisse zugewiesen. Die Einzelteile und/oder -geräte erhalten weiterhin frei konfigurierbare grafische Symbole zur Darstellung im Schema und/oder weiteren grafischen Darstellungsformen.

In einem zweiten Schritt 2 werden durch eine Kombination der von Erfassungsmodul erstellten Einzelteilen/-geräten Schemata - unterstützt durch graphische Verfahren - mittels einer Anordnung und/oder Verschaltung von einem Verarbeitungsmodul generiert.

In einer vorteilhaften Ausgestaltung des erfindungsgemäßen Verfahrens wird in einem weiteren Schritt 3 zusätzlich zur grafischen Darstellung der Schemata eine Stückliste generiert, wobei sich die Darstellung der Einzelteile und/oder - gerätesymbole sowie die Zusammenstellung der Stückliste sich entsprechend der festgelegten Liefergrenzen unterscheiden. Auf der Basis der so generierten Stücklisten ist somit ein automatisiertes Generieren von Bestellanforderungen ausführbar.

Die in definierten Datenfeldern der Schemata abgelegten allgemeinen technischen Informationen werden in geeigneter Form wie beispielsweise in Datenfeldern und/oder Datenblättern dargestellt.

Weiterhin können den Schemata kostenrelevante Daten sowie beliebige Dokumente zugewiesen werden.

In einem nachfolgenden Schritt 4 werden die von einer Datenquelle bereitgestellten Massedatensätze den aus den Einzelteilen und/oder -geräten erstellten Schemata mittels eines Verarbeitungsmoduls zugeordnet, wobei jeder Datensatz eine reale Anforderung darstellt.

Mittels der Zuordnung der bereitgestellten Massedatensätze zu den Schemata werden in einem letzen Schritt 5 spezifische Instanzen gebildet. Hierdurch ist in vorteilhafter Weise eine Erstellung von Auszählungen, Summierungen und Statistiken möglich.

## Patentansprüche

1. System zur automatisierten Generierung, Verwaltung und Dokumentation von Gerätezusammenstellungen mittels eines Datenverarbeitungssystems, welches wenigstens eine Datenquelle zur Bereitstellung von Massendaten und ein Erfassungsmodul zur Erstellung und Verwaltung von Objekten aufweist, wobei
- das Erfassungsmodul mit einem Grafikmodul zusammenwirkt, welches durch eine Kombination der erstellten Objekte Schemata erzeugt, und
- die vom Grafikmodul erzeugten Schemata in ein Verarbeitungsmodul zur Generierung von eineindeutigen Instanzen mittels einer mehrfachen Zuweisung der Schemata zu den Massendaten übertragbar sind.

2. System nach Anspruch 1, **dadurch gekennzeichnet, dass** die vom Verarbeitungsmodul generierten eineindeutigen Instanzen als Gerätezusammenstellungen mit einer vollständigen Dokumentation mittels eines Auswertemoduls darstellbar und/oder weiterverarbeitbar sind.

3. System nach Anspruch 2, **dadurch gekennzeichnet, dass** zu den Gerätezusammenstellungen durch die Kombination der erstellten Objekte automatisiert Stücklisten generierbar sind.

4. System nach Anspruch 2, **dadurch gekennzeichnet, dass** die generierten Gerätezusammenstellungen und Stücklisten mittels eines Ausgabe- und/oder Anzeigemoduls graphisch darstellbar sind und/oder daraus Auszählungen, Statistiken und Zusammenfassungen generierbar sind.

5. System nach einem der vorherigen Ansprüche, **dadurch gekennzeichnet, dass** den Objekten und Schemata Preise, Rabatte und/oder Kosten zur Erzeugung von Kostenaufstellungen, Kostenkatalogen und/oder Bestellanforderungen zuweisbar sind.

6. System nach einem der vorherigen Ansprüche, **dadurch gekennzeichnet, dass** den Objekten und Schemata zugehörige Dokumente zuweisbar sind, welche unter Berücksichtigung der erzeugten Instanzen der verwendeten Objekte und Schemata in einer zentralen Datenbank speicherbar sind.

7. System nach einem der vorherigen Ansprüche, **dadurch gekennzeichnet, dass** das Erstellen und Verwalten der Objekte, Schemata und/oder die Verwaltung der Massendatensätze mittels einer zentralen Plattform ausführbar ist.

8. System nach einem der vorherigen Ansprüche, **dadurch gekennzeichnet, dass** mittels intelligenter Mechanismen automatisiert ein Austausch von Objekten in den Schemata durchführbar.

9. System nach einem der vorherigen Ansprüche, **dadurch gekennzeichnet, dass** durch die Eingabe oder Zuordnung von Kalkulationsmengen zu den Schemata Kostenzusammenstellungen auch ohne die Generierung der Instanzen erzeugbar sind und/oder ein automatisiertes Generieren von Listen mit Kostenzusammenstellungen und Liefergrenzen durchführbar ist.

10. System nach einem der Ansprüche 3 bis 9, **dadurch gekennzeichnet, dass** auf der Basis der Stücklisten und Gerätezusammenstellungen Bestellanforderungen generierbar und verwaltbar sind.

11. System nach einem der vorherigen Ansprüche, **dadurch gekennzeichnet, dass** die Objekte durch einen Bezeichner eindeutig benannt sind, durch definierte Datenfelder beschreibbar sind und/oder frei konfigurierbare Symbole zur Darstellung in den erzeugten Schemata enthalten.

12. Verfahren zur automatisierten Generierung, Verwaltung und Dokumentation von Gerätezusammenstellungen mittels eines Datenverarbeitungssystems, wobei
- mittels wenigstens einer Datenquelle Massendaten bereitgestellt werden,
- mittels des Erfassungsmoduls Objekte erstellt und verwaltet werden,
- mittels eines Grafikmoduls aus den vom Erfassungsmodul erstellten Objekten durch eine Kombination der Objekte Schemata erzeugt werden, und
- die vom Grafikmodul erzeugten Schemata in ein Verarbeitungsmodul zur Generierung von eineindeutigen Instanzen mittels einer mehrfachen Zuweisung der Schemata zu den Massendaten übertragen werden.

13. Verfahren nach Anspruch 12, **dadurch gekennzeichnet, dass** die vom Verarbeitungsmodul generierten eineindeutigen Instanzen als Gerätezusammenstellungen mit einer vollständigen Dokumentation mittels eines Auswertemoduls dargestellt und/oder weiterverarbeitet werden.

14. Verfahren nach Anspruch 13, **dadurch gekennzeichnet, dass** zu den Gerätezusammenstellungen durch die Kombination der erstellten Objekte automatisiert Stücklisten generiert werden.

15. Verfahren nach Anspruch 14, **dadurch gekennzeichnet, dass** die generierten Gerätezusammenstellungen und Stücklisten mittels eines Ausgabe- und/oder Anzeigemoduls graphisch dargestellt werden und/oder daraus Auszählungen, Statistiken und Zusammenfassungen generiert werden.

16. Verfahren nach einem der vorherigen Ansprüche 12 bis 15, **dadurch gekennzeichnet, dass** den Objekten und Schemata Preise, Rabatte und/oder Kosten zur Erzeugung von Kostenaufstellungen, Kostenkatalogen und/oder Bestellanforderungen zugewiesen werden.

17. Verfahren nach einem der Ansprüche 12 bis 16, **dadurch gekennzeichnet, dass** den Objekten und Schemata zugehörige Dokumente zugewiesen werden, welche unter Berücksichtigung der erzeugten Instanzen der verwendeten Objekte und Schemata in einer zentralen Datenbank gespeichert werden.

18. Verfahren nach einem der Ansprüche 12 bis 17, **dadurch gekennzeichnet, dass** das Erstellen und Verwalten der Objekte, Schemata und/oder die Verwaltung der Massendatensätze mittels einer zentralen Plattform ausgeführt wird.

19. Verfahren nach einem der Ansprüche 12 bis 18, **dadurch gekennzeichnet, dass** mittels intelligenter Mechanismen automatisiert ein Austausch von Objekten in den Schemata durchgeführt wird.

20. Verfahren nach einem der Ansprüche 12 bis 19, **dadurch gekennzeichnet, dass** Kostenzusammenstellungen durch die Eingabe oder Zuordnung von Kalkulationsmengen zu den Schemata auch ohne die Generierung der Instanzen und/oder automatisiert Listen mit Kostenzusammenstellungen und Liefergrenzen erzeugt werden.

21. Verfahren nach einem der 14 bis 20, **dadurch gekennzeichnet, dass** auf der Basis der Stücklisten und Gerätezusammenstellungen Bestellanforderungen generiert und verwaltet werden.

22. Verwendung des Systems und Verfahrens nach einem der vorherigen Ansprüche zur in der technischen Planung, insbesondere in der Verfahrenstechnik, der Anlagentechnik, dem Anlagenbau, der Automatisierungstechnik, der Elektrotechnik oder Verkabelung.
